# EUROPEAN PATENT APPLICATION

(11) **EP 4 410 586 A1**
(43) Date of publication of application: **07.08.2024**
(21) Application number: 24150222.8
(22) Date of filing: 03.01.2024
(51) Int. Cl.: B60K 35/22, B60K 35/28, B60K 35/29, B60K 35/81, G06T 13/00

(54) **AUTOMOTIVE DISPLAY**

(30) Priority: 31.01.2023 JP 2023013054
(71) Applicant: Suzuki Motor Corporation, Hamamatsu-shi, Shizuoka 432-8611 (JP)
(72) Inventor: UCHIUMI, Sumihiko, Hamamatsu-shi,, 432-8611 (JP); SUZUKI, Takahiro, Hamamatsu-shi,, 432-8611 (JP); SUNDA, Takashi, Hamamatsu-shi,, 432-8611 (JP); KOMATA, Akane, Hamamatsu-shi,, 432-8611 (JP); OTA, Honoka, Hamamatsu-shi,, 432-8611 (JP)
(74) Representative: Plasseraud IP

(57) **Abstract**

[Problem to be Solved] To provide an automotive display with enhanced user convenience.

[Solution] An automotive display is an automotive display of a touch panel type or a touchless panel type, on which an animation AM1 is displayed, and a speed of the animation is changed in accordance with a traveling state of an automobile with the automotive display mounted therein.

## Description

### [Technical Field]

The present invention relates to an automotive display.

### [Background Art]

Patent Literature 1 describes an information processing apparatus that changes a design of a content display region on the basis of a date and time when a user has registered an electronic payment application, user information, and user location information.

### [Citation List]

### [Patent Literature]

[Patent Literature 1] JP 2020-170442 A

### [Summary of Invention]

### [Problem to be Solved by the Invention]

In view of the need for an automotive display with enhanced user convenience, an object of the present invention is to provide such an automotive display.

### [Means for Solving the Problem]

An automotive display according to the present invention is an automotive display of a touch panel type or a touchless panel type, on which an animation is displayed, and a speed of the animation is changed in accordance with a traveling state of an automobile with the automotive display mounted therein.

### [Advantageous Effect of Invention]

According to the present invention, it is possible to provide an automotive display with enhanced user convenience.

### [Brief Description of Drawings]

[Figure 1] Figure 1 is a block diagram illustrating a configuration of an in-vehicle system.
[Figure 2] Figure 2 is an explanatory diagram illustrating an example of a screen.
[Figure 3] Figure 3 is an explanatory diagram illustrating an example of a screen.
[Figure 4] Figure 4 is a flowchart illustrating a flow of animation display processing.
[Figure 5] Figure 5 is an explanatory diagram illustrating an example of a screen.
[Figure 6] Figure 6 is an explanatory diagram illustrating an example of a screen.
[Figure 7] Figure 7 is an explanatory diagram illustrating an example of a screen.
[Figure 8] Figure 8 is a flowchart illustrating a flow of processing in accordance with SOC.
[Figure 9] Figure 9 is an explanatory diagram illustrating an example of a computer hardware configuration of an automotive display.
[Figure 10] Figure 10 is an explanatory diagram illustrating an example of a software configuration of the automotive display.

### [Mode for Carrying Out the Invention]

Hereinafter, the present invention will be described on the basis of illustrated embodiments. However, the present invention is not limited to the embodiments described below.

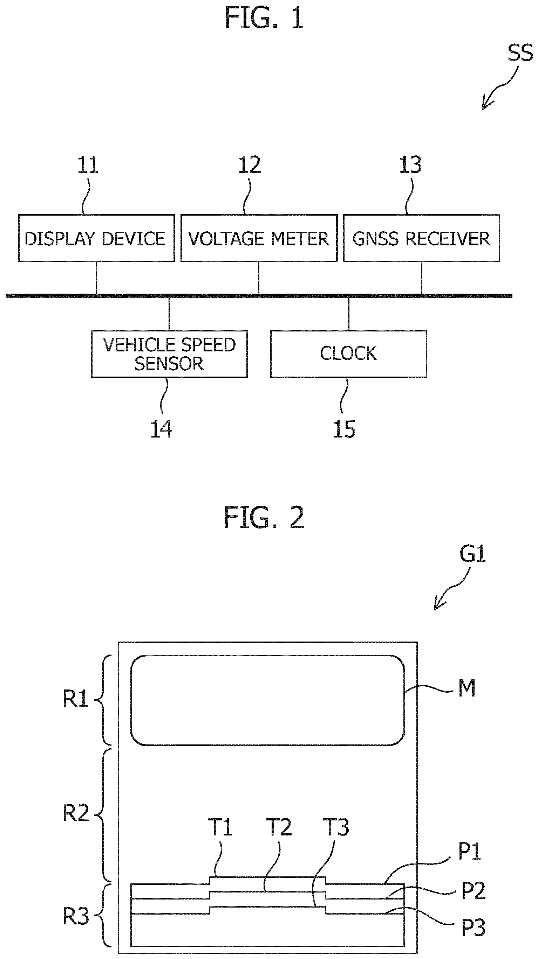

As illustrated in Figure 1, an in-vehicle system SS mounted in an automobile includes a display 11 for an automobile, a voltage meter 12 that measures a voltage of an in-vehicle battery mounted in the automobile, a global navigation satellite system (GNSS) receiver 13, a vehicle speed sensor 14 that detects a speed of the automobile, and a clock 15.

The display 11 is provided in an interior of the automobile and can be provided as a part of an instrument panel, for example. The display 11 can be of a touch panel type.

Figure 2 illustrates a rectangular screen G1 that is displayed on a screen display section of the display 11. The screen is divided into three rectangular regions aligned in the up-down direction and has an upper region R1, an intermediate region R2, and a lower region R3. In the upper region R1, a meter display region M for a speedometer and a tachometer is provided. The intermediate region R2 is blank in the screen G1. In the lower region R3, size-reduced rectangular function pages P1, P2, and P3 are displayed in an overlapping manner, and tabs T1, T2, and T3 (which will be described later) are displayed in an aligned manner in the up-down direction.

The function pages P1, P2, and P3 are pages for an occupant to display and operate vehicle functions. In one example, the function page P1 is a page for a car navigation function, the function page P2 is a page for an audio function, and the function page P3 is a page for an AC function. The tabs T1, T2, and T3 are provided on the upper sides of the function pages P1, P2, and P3, respectively.

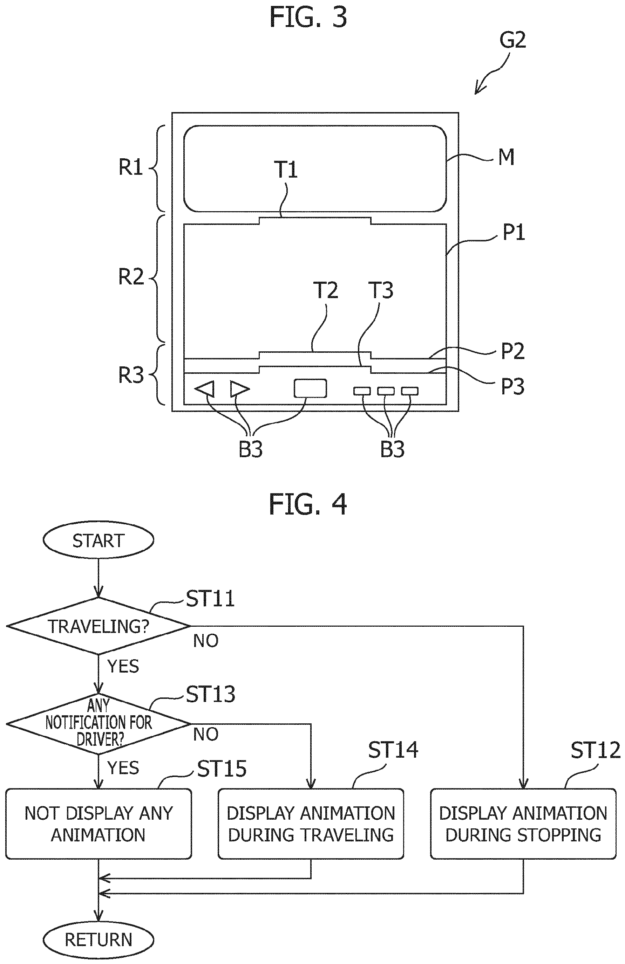

Once a user performs an operation of sliding the screen upward in a state in which the tab T1 on the screen G1 is touched, the screen is switched to a screen G2 illustrated in Figure 3. In the screen G2, the function page P1 provided with the tab T1 is displayed in an enlarged manner in the intermediate region R2.

Once an operation of sliding the screen downward in a state in which the tab T1 on the screen G2 is touched is performed by the user, the screen is switched to the screen G1 illustrated in Figure 2.

Although the tab T1 was described as an example, the same applies to the tabs T2 and T3, and it is possible to perform switching from one of enlarged display and size-reduced display of a corresponding vehicle function page to the other.

Figure 4 illustrates a flow of processing performed by a processor included in the display 11.

In Step ST 11, a control unit determines whether or not the subject vehicle is traveling on the basis of a detection result of at least one of the vehicle speed sensor 14, a preceding vehicle detection section (which will be described later), and a traffic light detection section (which will be described later). Step ST13 is then performed in a case in which it is determined that the subject vehicle is traveling, or Step ST12 is performed otherwise.

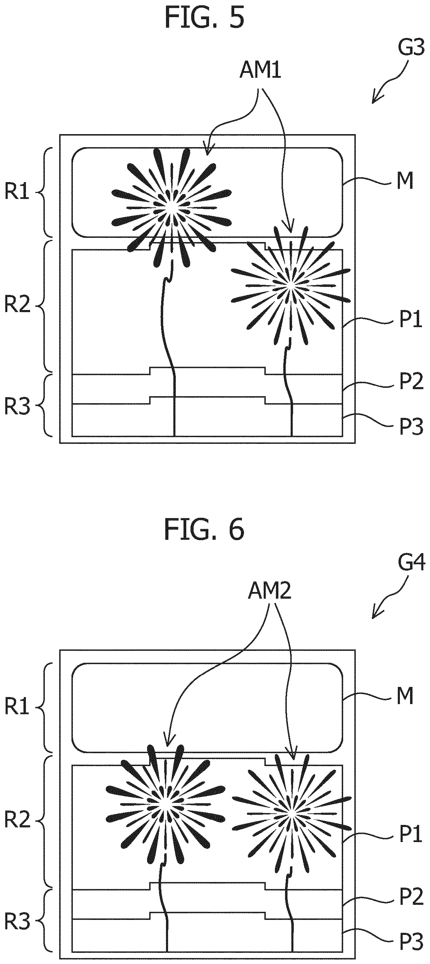

In Step ST12, the control unit controls display of the display 11 to a screen G3 illustrated in Figure 5. Specifically, a firework animation AM1 is displayed over the entire upper region R1, the intermediate region R2, and the lower region R3. A launch speed and burst speed of the firework animation AM1 are relatively high. After this step, return processing is performed.

In Step ST13, the control unit determines whether or not there is a message which a driver of the subject vehicle is to be notified of. An example of the message is a message indicating that an antiskid prevention device mounted in the subject vehicle is being operated. Step ST15 is then performed in a case in which it is determined that there is a message, or Step ST14 is performed otherwise.

In Step ST14, the control unit controls display of the display 11 to a screen G4 illustrated in Figure 6. Specifically, a firework animation AM2 is displayed across the intermediate region R2 and the lower region R3. The firework animation AM2 is not displayed in the upper region R1 in which the meter display region M is provided. The launch speed and the burst speed of the firework animation AM2 are lower than those of the firework animation AM1. After this step, return processing is performed.

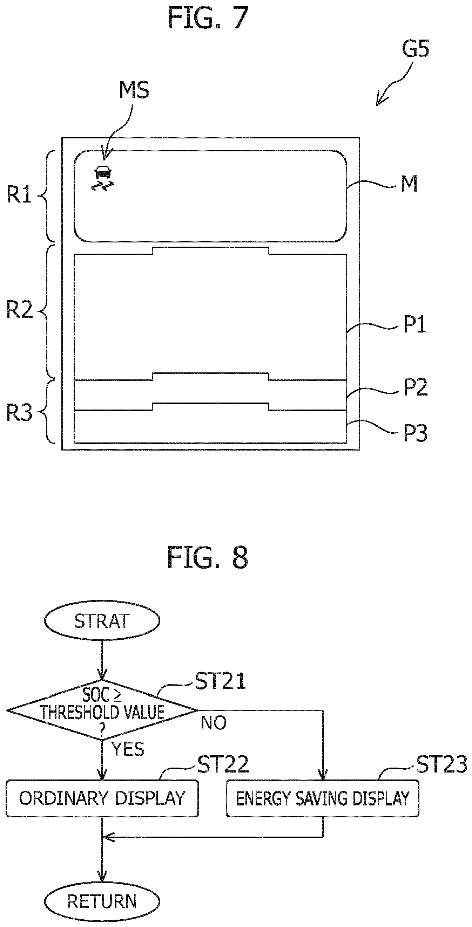

In Step ST15, the control unit controls display of the display 11 to a screen G5 illustrated in Figure 7. Specifically, a message MS is displayed in the meter display region M while no animation is displayed therein. After this step, return processing is performed.

Figure 8 illustrates a flow of different processing (processing in accordance with SOC) performed by the control unit included in the display 11.

In Step S21, the control device determines whether or not SOC (state of charge) of an in-vehicle battery is equal to or greater than a predetermined threshold value.

Step ST22 is then performed in a case in which it is determined that the SOC is equal to or greater than the predetermined threshold value, or Step ST23 is performed otherwise.

In Step ST22, the control device performs ordinary display. After this step, return processing is performed.

In Step ST23, the control device performs energy saving display. Specifically, the animation speed is reduced, and the background color is changed to a color suitable for saving energy. For example, it is possible to change the color from chromatic to achromatic. After this step, return processing is performed.

It is possible to automatically change the display background (color, pattern, animation, and the like) depending on location, time, season, an individual, and the like. Examples are as follows.
a) An animation display region and a motion speed are changed in accordance with a traveling state such as during stopping or during traveling.
b) In regard to a motion speed of an animation, the speed of the motion of the animation during traveling is less than that during stopping. In a case in which there is a notification for the driver, the animation can be in a non-display state.
c) An animation can be displayed over the entire screen including the meter display region during stopping, while an animation can be displayed in the regions other than the meter display region during traveling.
d) Timing for switching display during traveling and during stopping is as follows.

When switching from a stopped state to a traveling state

In a case in which a preceding vehicle is present, the subject vehicle is regarded as traveling even if the vehicle speed of the subject vehicle is zero at the time when the preceding vehicle starts to travel.

In a case in which no preceding vehicle is present, the subject vehicle is regarded as traveling even if the vehicle speed is zero at the time when the signal of the traffic light is changed from a red light to a green light. In a case in which there is no traffic light, the vehicle is regarded as traveling when the speed detected by the vehicle speed sensor is non-zero.

At the time of switching from a state during traveling to a state during stopping

The subject vehicle is regarded as stopping at the time when the vehicle speed detected by the vehicle speed sensor becomes zero. If the subject vehicle is determined to be stopping, the animation display region and the speed are changed gradually.
e) The background (color, pattern, animation, and the like) is changed depending on a state of charge (SOC) of the vehicle.

In a case in which the SOC is relatively low, the animation speed is reduced, and the background color is changed to a color suitable for saving energy.

According to a) above, it is possible to prevent the animation from interrupting the driver who is driving the vehicle.

According to b) above, the animation speed during traveling is relatively low, and it is thus possible to drive the vehicle more safely with a sense of security.

According to c) above, no animation is displayed in a part (meter display region) that the driver often views during driving, and the driver can drive the vehicle while being less distracted.

According to d) above, the switching from the state during stopping to the state during traveling occurs earlier, and it is thus possible to reduce a likelihood that the animation display region and the speed change after the vehicle speed becomes non-zero. It is possible to make the driver less distracted.

Since sudden switching does not occur when the state during traveling is changed to the state during stopping, it is possible to make the driver less inattentive.

According to e) above, it is possible to change the display in accordance with the state of charge and thereby saving energy as needed.

The background can be freely changed when a parking brake is operated before the state during traveling is achieved after an ignition key is turned on. Since higher safety is still achieved even if the background is changed often, it is possible to prevent the driver from being bored by changing the background in a slideshow manner under such a condition.

Energy saving display is performed during idle reduction.

According to the aforementioned embodiment, it is possible to effectively use the intermediate region and the lower region located further downward than the upper region in which the meter display region is present as regions for enlarged display or size-reduced display of the function pages provided with the tabs.

It is possible to easily achieve a change from one of the enlarged display and the size-reduced display of the vehicle function pages to the other by a tab operation. Operability and comfort are improved.

Additionally, it is possible to save a display state (enlarged display or size-reduced display) of the vehicle function pages when the ignition key is turned off. It is possible to bring the display state of the vehicle function pages into the same display state as the saved display state when the ignition key is turned on again.

The animation speed can be set such that the speed is the highest when the vehicle is being stopped and no operation is being performed, is the second highest, when the vehicle is being stopped and an operation is being performed, and is the lowest when the vehicle is traveling.

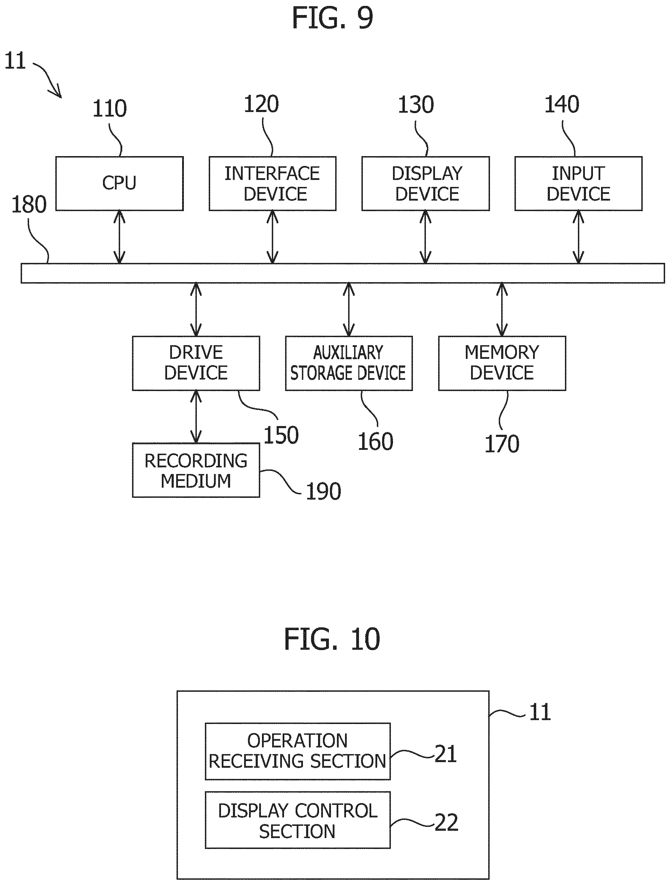

Figure 9 illustrates a computer hardware configuration example of the automotive display 11. The automotive display 11 includes a CPU (processor) 110, an interface device 120, a display device 130, an input device 140, a drive device 150, an auxiliary storage device 160, and a memory device 170, and these are connected to each other via a bus 180.

A program that realizes the functions of the automotive display 11 is provided by a recording medium 190 such as a CD-ROM. Once the recording medium 190 recording the program is set in the drive device 150, the program is installed in the auxiliary storage device 160 from the recording medium 190 via the drive device 150. Alternatively, the installation of the program is not necessarily performed using the recording medium 190 and can also be performed through a network. The auxiliary storage device 160 stores the installed program and stores necessary files, data, and the like.

The memory device 170 reads the program from the auxiliary storage device 160 and stores the program in a case in which an instruction for activating the program is provided. The CPU 110 realizes the functions of the automotive display 11 in accordance with the program stored in the memory device 170. The interface device 120 is used as an interface for establishing connection to another computer through a network. The display device 130 displays a graphical user interface (GUI) or the like based on the program. An example of the GUI is as described above. The input device 140 is a touch panel or the like.

Figure 10 illustrates a configuration example of software functions of the automotive display 11. The automotive display 11 includes an operation receiving section 21 that receives user operations (a sliding operation and the like) and a display control section 22 that controls display on the screen in accordance with the operations received by the operation receiving section 21. The display control section 22 can also control the display on the screen on the basis of data received from at least one of the voltage meter 12, the GNSS receiver 13, the vehicle speed sensor 14, and the clock 15.

The automotive display 11 may further include a preceding vehicle detection section and a traffic light detection section, which will be described later. In this case, the display control section 22 can also control the display on the screen on the basis of detection information of the preceding vehicle detection section and the traffic light detection section.

Unnecessary inputs to the automotive display are reduced by shortening the user operation time and reducing inconvenience, and it is thus possible to reduce arithmetic operation load of the automotive display.

The display 11 is not limited to one of a touch panel type and may be one of a touchless panel type (a model that can be operated merely by locating a finger close to the panel without direct contact therewith).

In regard to the modes described hitherto, the following supplements will be disclosed.

### Supplement C1

An automotive display of a touch panel type or a touchless panel type,
on which an animation is displayed,
a speed of the animation being changed in accordance with a traveling state of an automobile with the automotive display mounted therein.

### Effect of Supplement C1

An appropriate speed of the animation is achieved depending on the traveling state in order to reduce a likelihood that a driver during traveling will be distracted by the animation. The driver can thus enjoy the animation while performing safe driving.

Note that it is also possible to stop the animation by a user operation.

### Supplement C2

The automotive display according to Supplement C 1, in which the speed of the animation during traveling of the automobile is lower than the speed of the animation during stopping of the automobile.

### Effect of Supplement C2

Since the speed of the animation during traveling of the vehicle is lower than that during stopping, the driver can further concentrate on the driving.

Since the speed of the animation is relatively high during stopping, the driver can more easily view the animation and enjoy the motion. Comfort is improved.

### Supplement C3

The automotive display according to Supplement C1, in which a background of a display section of the automotive display is changed in accordance with a state of charge of a battery mounted in the automobile, and
the animation is stopped in a case in which a charge rate of the battery is lower than a predetermined value.

### Effect of Supplement C3

The user can visually recognize the battery state by the animation being stopped in a case in which the charge rate of the battery is relatively low.

### Supplement C4

The automotive display according to Supplement C1, in which the animation is not displayed or is stopped when a message which a driver is to be notified of is displayed on the automotive display.

### Effect of Supplement C4

Although there is a likelihood that the driver does not notice content of a notification if the animation is displayed when there is a need of notification for the driver, it is possible to reduce the likelihood.

Note that the animation may not be displayed or may be stopped only in a case in which the message is displayed for a period of time that is less than a predetermined time.

In this manner, it is possible to address a user who does not desire non-display or stop of the animation in a case in which there is a displayed message for a predetermined time or more.

### Supplement C5

The automotive display according to Supplement C2 including: a preceding vehicle detection section; and a traffic light detection section, in which
the automobile is determined to be traveling when the preceding vehicle detection section detects that a preceding vehicle within a predetermined range from the vehicle has started during stopping of the vehicle or when the preceding vehicle detection section does not detect the preceding vehicle and the traffic light detection section detects that a signal of a traffic light has been switched to a green light during stopping for waiting at the traffic light.

### Effect of Supplement C5

The animation display method (the speed or the region) is switched more quickly when the traveling state is changed from the state during stopping to the state during traveling. Although there is a likelihood that the driver will be distracted in a case in which the vehicle speed is changed from zero to non-zero and the animation display method is then switched (although it is better to concentrate on the vehicle traveling operation during traveling, there is a likelihood that switched information appears in sight and the driver tends to pay attention to the information if the animation display method is changed after the vehicle starts to move), it is possible to reduce the likelihood.

### Supplement C6

The automotive display according to Supplement C2, in which the speed of the animation is changed gradually when the traveling state of the automobile is changed from a state during traveling to a state during stopping.

### Effect of Supplement C6

Unlike switching from the state during stopping to the state during traveling, problems in terms of safety are unlikely occur if the animation speed switching is not performed quickly at the time of switching from the state during traveling to the state during stopping.

Therefore, it is possible to avoid the user having a feeling of discomfort or losing concentration on driving due to sudden switching, by changing the speed gradually.

Although the embodiments of the present invention have been described above, the present invention is not limited to the embodiments that have already been described, and various modifications and changes can be made on the basis of the technical idea of the present invention.

### [Reference Signs List]

SS In-vehicle system
11 Display
12 Voltage meter
13 GNSS receiver
14 Vehicle speed sensor
15 Clock
21 Operation receiving section
22 Display control section
G1 to G5 Screen
T1 to T3 Tab
P1 to P3 Vehicle function page
R1 to R3 Region
M Meter display region
AM1, AM2 Animation
MS Message

## Claims

1. An automotive display of a touch panel type or a touchless panel type, on which an animation is displayed, a speed of the animation being changed in accordance with a traveling state of an automobile with the automotive display mounted therein.

2. The automotive display as claimed in claim 1, wherein the speed of the animation during traveling of the automobile is lower than the speed of the animation during stopping of the automobile.

3. The automotive display as claimed in claim 1, wherein
a background of a display section of the automotive display is changed in accordance with a state of charge of a battery mounted in the automobile, and
the animation is stopped in a case in which a charge rate of the battery is lower than a predetermined value.

4. The automotive display as claimed in claim 1, wherein the animation is not displayed or is stopped when a message which a driver is to be notified of is displayed on the automotive display.

5. The automotive display as claimed in claim 2, comprising:
a preceding vehicle detection section; and a traffic light detection section, wherein
the automobile is determined to be traveling when the preceding vehicle detection section detects that a preceding vehicle within a predetermined range from the automobile has started during stopping of the automobile or when the preceding vehicle detection section does not detect the preceding vehicle and the traffic light detection section detects that a signal of a traffic light has been switched to a green light during stopping for waiting at the traffic light.

6. The automotive display as claimed in claim 2, wherein the speed of the animation is changed gradually when the traveling state of the automobile is changed from a state during traveling to a state during stopping.
